(19) Europäisches Patentamt
European Patent Office
Office européen des brevets

(11) **EP 4 509 375 B1**

(12) **EUROPEAN PATENT SPECIFICATION**

(45) Date of publication and mention
of the grant of the patent:
**12.11.2025  Bulletin 2025/46**

(51) International Patent Classification (IPC):
***B60W 30/10*** *(2006.01)*   ***B60W 30/18*** *(2012.01)*
***B60W 60/00*** *(2020.01)*

(21) Application number: **23192004.2**

(22) Date of filing: **17.08.2023**

(52) Cooperative Patent Classification (CPC):
**B60W 30/10; B60W 30/18145; B60W 60/00;**
B60W 2540/225

(54) **METHODS FOR DETERMINING AN INTENDED TRAJECTORY OF A DRIVER AND DRIVER ASSISTANCE SYSTEMS**

VERFAHREN ZUR BESTIMMUNG EINER SOLLTRAJEKTORIE EINES FAHRERS UND FAHRERASSISTENZSYSTEME

PROCÉDÉS DE DÉTERMINATION D'UNE TRAJECTOIRE PRÉVUE D'UN CONDUCTEUR ET SYSTÈMES D'ASSISTANCE AU CONDUCTEUR

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**19.02.2025  Bulletin 2025/08**

(73) Proprietor: **TOYOTA JIDOSHA KABUSHIKI KAISHA**
**Toyota-shi, Aichi-ken, 471 8571 (JP)**

(72) Inventors:
- **RIOS LAZCANO, Andrea Michelle**
  **1140 BRUSSELS (BE)**
- **CARRERA AKUTAIN, Xabier**
  **1140 BRUSSELS (BE)**

(74) Representative: **Cabinet Beau de Loménie**
**103, rue de Grenelle**
**75340 Paris Cedex 07 (FR)**

(56) References cited:
CN-A- 114 103 998      CN-B- 113 536 909
JP-A- 2008 018 853     US-A1- 2010 036 563
US-A1- 2012 046 802    US-A1- 2021 394 828

**EP 4 509 375 B1**

**Description**

BACKGROUND OF THE INVENTION

1. Field of the Invention

The invention relates to the field of driver assistance systems. In particular, the invention is related to computer-implemented methods for determining an intended trajectory of a driver. Further, the invention relates to driver assistance systems taking into account an intended trajectory of a driver.

2. Description of Related Art

There is an increased interest in the automotive industry to widely deploy autonomous vehicles on public roads. Before achieving this target, vehicle manufacturers are reinforcing the efforts on the enhancement of intermediate levels of automation through Advanced Driver Assistance Systems (ADAS).

ADAS uses sensors, cameras, and other detection devices to gather information about the vehicle's surroundings and provide helpful alerts or automated actions. In particular, ADAS acts on the controls of the vehicle so that the vehicle adopts a trajectory that is optimized in terms of several criteria such as geometry of the road, safety, desired speed, or fuel consumption.

However, current systems, such as for example the Lane Keeping Assist (LKA), often present an unnatural behavior because they are designed without considering the driver, which can lead to reduced acceptance of the ADAS by the driver (see [REF 1]).

There is thus a need for ADAS taking into account the state and/or intention of the driver.

The following references disclose various methods relating to driver assistance systems and understanding of the driver behavior.

[REF 1] PARASURAMAN, Raja et RILEY. Victor. Humans and automation: Use, misuse, disuse, abuse. Human factors, 1997, vol. 39, no 2, p. 230-253.

[REF 2] CN111797809A. Driver vision fusion method for automatic trajectory.

[REF 3] CARRERA AKUTAIN, Xabier, ONO, Kimiaki, COMOLLI, Francesco, et al. Further understanding of steering feedback and driver behavior through the application of an instrumented steering wheel. In : 10th International Munich Chassis Symposium 2019: chassis. tech plus. Springer Fachmedien Wiesbaden, 2020. p. 481-502.

[REF 4] GOODRICH, Michael A. et BOER, Erwin R. Model-based human-centered task automation: a case study in ACC system design. IEEE Transactions on Systems, Man, and Cybernetics-Part A: Systems and Humans, 2003, vol. 33, no 3, p. 325-336.

[REF 5] LAZCANO, Andrea Michelle Rios, NIU, Tenghao, CARRERA AKUTAIN, Xabier, et al. MPC-based haptic shared steering system: A driver modeling approach for symbiotic driving. IEEE/ASME Transactions on Mechatronics, 2021, vol. 26, no 3, p. 1201-1211.

[REF 6] PALAIS, Bob, PALAIS, Richard, et RODI, Stephen. A disorienting look at Euler's theorem on the axis of a rotation. The American Mathematical Monthly, 2009, vol. 116, no 10, p. 892-909.

[REF 7] FALCONE, Paolo, TUFO, Manuela, BORRELLI, Francesco, et al. A linear time varying model predictive control approach to the integrated vehicle dynamics control problem in autonomous systems. In : 2007 46th IEEE Conference on Decision and Control. IEEE, 2007. p. 2980-2985.

[REF 8] XU, Ying, TANG, Wentao, CHEN, Biyun, et al. A model predictive control with preview-follower theory algorithm for trajectory tracking control in autonomous vehicles. Symmetry, 2021, vol. 13, no 3, p. 381.

[REF 9] VU, Trieu Minh, MOEZZI, Reza, CYRUS, Jindrich, et al. Feasible Trajectories Generation for Autonomous Driving Vehicles. Applied Sciences, 2021, vol. 11, no 23, p. 11143.

[REF 10] KLAIB, Ahmad F., ALSREHIN, Nawaf O., MELHEM, Wasen Y., et al. Eye tracking algorithms, techniques, tools, and applications with an emphasis on machine learning and Internet of Things technologies. Expert Systems with Applications, 2021, vol. 166, p. 114037.

US 2010/036563 A1 discloses a travel support apparatus that sets a travel locus of a movable body and provides a travel support for the movable body based on setting of the travel locus.

US 2012/046802 A1 discloses relate to apparatuses for setting a target trajectory of a mobile object, and for supporting the drive of the mobile object based on the set target trajectory.

JP 2008 018853 A discloses an information recording device for extracting and recording predetermined information from information relating to a vehicle or an occupant.

US 2021/394828 A1 discloses operator assistance functions and an operator action position module for lane assistance functions.

SUMMARY OF THE INVENTION

According to aspects of the present disclosure, a computer-implemented method to determine an intended trajectory of a driver of a vehicle as defined in claim 1 is provided.

In the present description, the preview point (or heading point) of the driver is a point at which the driver is looking in a driving scene. In particular, the driving scene may be a driving scene ahead of the vehicle, into which the vehicle is driving. Such driving scene may be detected with a sensor such as a camera. The image of the driving scene (driving scene image) may be a 3D image or a depth image of the driving scene.

In the present description, the vehicle may comprise various types of vehicles (for example a car) with various levels of autonomy. In particular the vehicle may be a vehicle with Society of Automotive Engineers (SAE) levels ranging from 2 to 5.

In the present description, the eye gazing data are data indicative of a gazing direction of the driver. In particular, the eye gazing data may comprise the position of the eye of the driver and/or the gaze angle of the line of sight of the driver.

With the present method, it is possible to determine an intended trajectory of a driver based on the eye gazing data indicative of a gazing direction of the driver. The eye gazing data are used to calculate the coordinates of a preview point located within the driving scene. Further, the coordinates of the preview point are used to calculate a trajectory that is intended by the driver but may differ from the trajectory that is followed by the vehicle.

Therefore, it is possible to determine the trajectory that the driver is considering, which may be different to the trajectory that the vehicle is following, especially when the vehicle is under the assistance of an ADAS that solely considers parameters which are extrinsic to the driver. The determination of the intended trajectory of the driver is very helpful for correcting a driver model or an ADAS operating on a vehicle in order, for example, to improve driver acceptance of the ADAS and, thereby, the comfort of the driver.

The present method is very advantageous over existing methods wherein target trajectories are calculated based on models assuming an ideal and simplified behavior of the driver, for example models wherein the driver always follows a particular geometry of the road such as the centerline of the road.

The method further comprises a step of acquiring a head position of the driver with respect to the vehicle; wherein the heaposition of the driver is used tocalculate the coordinates of the preview point (based on the eye gazing data).

The eye gazing data are acquired in a first reference frame that is a reference frame of the head of the driver, and the coordinates of the preview point are calculated in a second reference frame that is a reference frame of the vehicle, wherein a change from the first reference frame to the second reference frame is calculated based on the head position of the driver.

Measuring the head position of the driver may facilitate the calculation of the coordinates of a preview point. In particular, when the eye gazing data are only known in a reference frame that is different from a reference frame of the driving scene, it is important to obtain information on the head position.

According to embodiments, the method further comprises a step of acquiring a 3D image of the driving scene, wherein the coordinates of the preview point in the driving scene are calculated by associating an element of the 3D image to the preview point.

According to embodiments, the step of determining an intended trajectory of the driver comprises interpolating a path between the coordinates of the preview point and coordinates of the vehicle (see for example [REF 9] and [REF 10]). Such interpolation may take into account other parameters such as road curvature (for example road curvature extracted from an image of the driving scene) or vehicle dynamic information (for example vehicle speed or lateral acceleration).

According to embodiments, the method is executed repetitively while the vehicle is being driven by the driver with a predetermined refreshing rate.

According to aspects of the present disclosure, a computer-implemented driver assistance system for a vehicle as claimed in claim 4 is presented. The system comprises:

- an eye-tracker configured to acquire eye gazing data indicative of a gazing direction of a driver of the vehicle;
- a control unit configured to generate an intended trajectory of the driver based on the eye gazing data acquired by the eye-tracker, and to generate actuation signals based on the intended trajectory of the driver, the actuation signals being sent to controls of the vehicle (vehicle controls) in order to modify a trajectory of the vehicle.

The present driver assistance system may be part of an ADAS system controlling a vehicle.

According to embodiments, the system comprises a driving scene camera configured to acquire an image of a driving scene, wherein the control unit is configured to calculate coordinates of a preview point of a driver in the driving scene based on the eye gazing data (and the image of the driving scene), and to generate the intended trajectory based on the coordinates of the preview point.

The system comprises an inertial measurement unit configured to measure the head position of the driver with respect to a reference frame of the vehicle, wherein the control unit is configured to generate the intended trajectory further based on the head position.

According to embodiments, the system further comprises a force sensor configured to detect grip force of the driver on the steering wheel of the vehicle, wherein the control unit is configured to generate the intended trajectory further based on such grip force.

According to embodiments, the control unit is configured to receive the intended trajectory as a target over a given prediction horizon in order to generate the actuation signals. In particular, the control unit may implement a controller based on model predictive control (MPC).

In other embodiments, the control unit may implement a Linear-Quadratic-Regulator (LQR) controller.

According to embodiments, the control unit is further configured to generate the actuation signals based on a difference between the intended trajectory and a current trajectory of the vehicle in order to command a progressive transition between the actual trajectory and the intended trajectory.

According to embodiments, the system further comprises a memory unit communicatively coupled to the control unit, wherein the memory unit is configured to store a reference trajectory associated with a driver profile

According to embodiments, the control unit is further configured to generate the actuation signals based on a comparison between the intended trajectory and a reference trajectory stored in the memory unit.

According to embodiments, the memory unit is configured to store the intended trajectory as a new reference trajectory associated with a new driver profile of the driver (specifically adapted to the driver).

According to embodiments, the eye-tracker comprises eye-tracking glasses arranged on the driver's head, or a camera set located in a cabin of the vehicle surrounding the driver.

Advantageously, with the present system, it is possible to capture the driver's intention regarding the trajectory of the vehicle and adapt such intention to other conditions considered by an ADAS (road conditions, traffic, topography).

Therefore, the control of the vehicle trajectory can be specifically adapted to the driver's intention. Further, the adaptation (customization) of the control of the vehicle can be achieved in a closed loop system taking into account real-time driver's intentions based on refreshed eye gazing data. Further, the actuation signals output by the control unit are specific to the driver and specific to the particular moment at which they are calculated, meaning that such actuation signals capture the instantaneous driving style of the driver.

This is in stark contrast with systems of the prior art such as the systems disclosed in [REF 2] wherein driver parameters are only processed a single time and offline, based on an average distribution model, without considerations that are specific to the driver.

The present disclosure is further related to a vehicle comprising the above described driver assistance systems.

The present disclosure is further related to a computer program including instructions for executing the steps of the above described method when said program is executed by a computer. This program can use any programming language and take the form of source code, object code or a code intermediate between source code and object code, such as a partially compiled form, or any other desirable form.

The present disclosure is further related to a recording medium readable by a computer and having recorded thereon a computer program including instructions for executing the steps of the above described method. The recording medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a diagram illustrating principles of a method according to the present disclosure;
FIG. 2 is a block diagram illustrating aspects of a method according to the present disclosure; and
FIGS. 3 is a block diagram illustrating aspects of a system according to the present disclosure.

DETAILED DESCRIPTION OF EMBODIMENTS

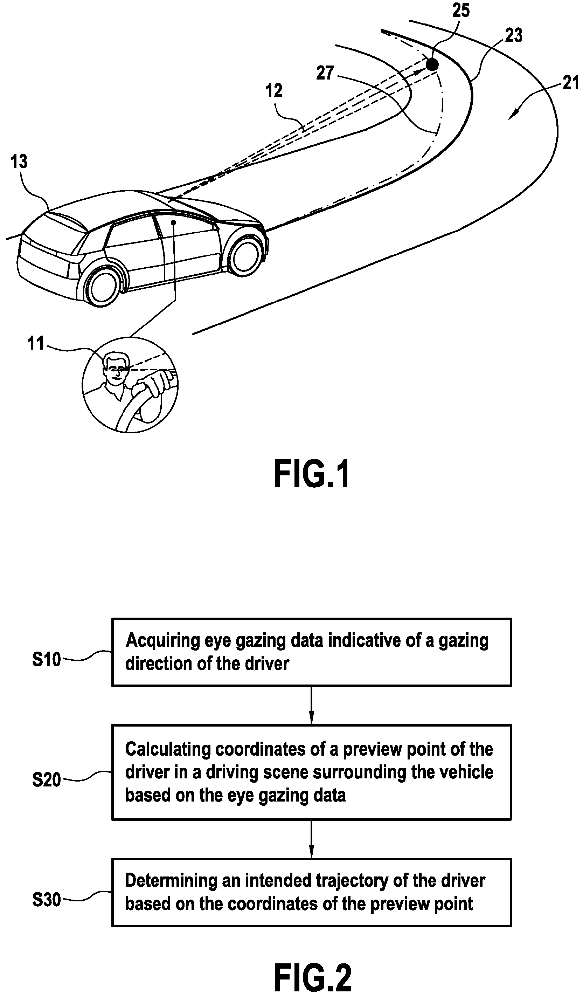

Methods for determining an intended trajectory of a vehicle and driver assistance system for a vehicle, which constitute exemplary embodiments of the present disclosure, are now going to be presented in relation with FIGS.1-3.

FIG. 1 represents a situation in which a driver 11 drives a vehicle 13 (a car) on a road 21 under assistance from an advanced driver assistance system (ADAS) according to the present disclosure, which is comprised in the vehicle 13. The vehicle 13 follows a preset trajectory 23 that is set by the driver 11 under control of the ADAS. The ADAS may calculate and control the trajectory in different ways. In particular, the ADAS may control the trajectory based on detection of the road curvature and mobile agents on the road while ensuring safety of the vehicle. Further, the ADAS according to the present disclosure controls the trajectory of the vehicle by taking into account the intended trajectory 27 of the driver 11.

As shown in the magnifying circle in FIG. 1, the driver 11 is gazing at a particular gazing direction 12 (line of sight) that is pointing at a preview point 25 in the driving scene (the driving scene comprising a part of the road 21 ahead of the vehicle 13). The preview point 25 is part of an intended trajectory 27 (preview trajectory) that is intended by the driver 11 considering his line of sight, which may differ from the preset trajectory 23 (for example target trajectory of the ADAS).

A problem arises when the difference between the target trajectory 23 and the intended trajectory 27 causes a disturbance to the driver, leading to a feeling of unnatural behavior of the vehicle and a reduced acceptance of the ADAS by the driver.

Aspects of the present disclosure aim at taking into account the intended trajectory 27 of the driver 11 by the ADAS in order to define an improved target trajectory 23 that is closer to the intended trajectory 27 of the driver 11 and thereby improves driver's acceptance of the ADAS.

In this context, the present disclosure relates to a computer-implemented method to determine an intended trajectory of a driver comprising the steps represented in FIG. 2. Specifically, the method comprises: S10: acquiring eye gazing data indicative of a gazing direction of the driver; S20: calculating coordinates of a preview point of the driver in a driving scene surrounding the vehicle based on the eye gazing data; and S30: determining an intended trajectory of the driver based on coordinates of the preview point.

In a first step S10, eye gazing data indicative of a gazing direction of a driver are acquired. The eye gazing data may comprise any parameters from which the gazing direction can be extracted. In particular, the eye gazing data may comprise the position of the eyes of the driver.

Several technologies for gaze tracking may be used. In embodiments, the gazing direction may be estimated by an eye-tracking unit consisting of a camera (or a set of camera) directed at the driver. In particular, the camera may be an infrared camera capable of estimating the gazing direction under low illumination conditions such as during the night. The eye gazing data may be extracted with computer vision methods of the prior art, such as the method disclosed in [REF 10]. Typically, an image of the face of the driver is processed through machine learning-based models. Using key-points of the face such as the eyes, the nose, and the mouth, the models may provide the eye direction and the head position.

In other embodiments, the gazing direction may be estimated using eye-tracking unit such as eye-tracking glasses (for example Tobii® glasses). Such glasses cover the eyes of a driver and are generally equipped with miniature infrared eye cameras below the eyes and infrared illuminators around the eye, per glass. The position of the eyes are measured and, using 3D eye models, the eye gazing direction, the eye position and the pupil size may be obtained . Further, such glasses may also be equipped with a driving scene camera and inertial measurement device such as gyroscopes and accelerometers. The driving scene camera captures an image of the driving scene, for example a 3D image of the driving scene.

In step S20, coordinates of a preview point 25 of the driver are calculated based on the eye gazing data. The preview point 25 of the driver 11 is a point in the driving scene ahead of the vehicle 13 that the driver 11 is considering while driving. Therefore, the preview point 25 is a point that is a part of a trajectory intended by the driver (intended trajectory 27) but which may differ from the current trajectory 23 of the vehicle. In particular, the current trajectory 23 may be a trajectory that is preset in the ADAS assisting the control of the vehicle 13. Further, the current trajectory 23 may be a trajectory that is calculated by the ADAS system in based on parameters extrinsic to the driver (road centerline, mobile agents, obstacles, etc.). In particular, in existing ADAS, the current trajectory 23 may be calculated based on road geometry assuming an ideal behavior of a driver 11 that would always follow the centerline of the road 21.

In embodiments, an aim of step S20 is to calculate the coordinates of the preview in the reference frame of the vehicle (which is generally the reference frame used in the ADAS system).

In embodiments, the eye gazing data are acquired by eye-tracking glasses and comprise 3D coordinates of the preview point in the reference frame of the glasses. Such coordinates are computed, for example, based on the eye position and the image of the driving scene captured by the driving scene camera.

When the driver is looking at the preview point in the driving scene, his head may move with respect with the vehicle. The motion between two head positions may be defined by a 3-by-3 rotation matrix. Therefore, in order to convert the coordinates from the reference frame of the glasses to the reference frame of the vehicle, a rotation matrix can be calculated. To this aim, several methods may be used such as the Euler angles method, where the rotation matrix is defined as a succession of rotations around three axes (see [REF 6]) or quaternion-based methods, where the rotation matrix is defined as a rotation around an arbitrary axis using 4-dimensional vectors.

In embodiments, rotations angles of the head are measured with an inertial measurement unit, such as a gyroscope, and are used to define a rotation matrix which, in turn, is used to calculate the position of the head with respect to the reference frame of the vehicle. Once the position of the head in the reference frame of the vehicle is known, 3D coordinates of the preview point in the reference frame of the vehicle can be calculated from the coordinates of the preview point in the reference frame of the glasses with the following formula:

$$x_v = R^{vu} x_u \qquad \text{(Equation 1)}$$

In Equation 1, $x_v$ is a vector comprising the 3D coordinates of the preview point in the (rotated) reference frame of the glasses $v$, $x_u$ is a vector comprising the 3D coordinates of the preview point in the reference frame of the vehicle u (with respect to which the head is rotated), and $R^{vu}$ is the rotation matrix describing the rotation of the head with respect to the reference frame of the vehicle.

In embodiments, the position of the preview point with respect to the elements of the driving scene is analyzed in order to ensure that the eye gazing data correspond to the driver gazing at a preview point and not at an obstacle or another element of the driving scene different than the preview point. Further, the position of the preview point is analyzed to ensure that the eye gazing data do not correspond to a state wherein the driver is distracted, for example when the driver is looking at a phone.

In embodiments, an element of the image of the driving scene is associated with the preview point, so that the 3D coordinates of the element are associated to the preview point. Such coordinates association may be performed by various known image processing and computer vision methods, see [REF 9] and [REF 10].

In step S30, an intended trajectory of the driver is determined based on the coordinates of the preview point. In embodiments, the preview point is input in an ADAS of the vehicle in order to determine an intended trajectory. For example, it may be determined if the preview point belongs to the target trajectory or if the preview point does not belong to the target trajectory. If the preview point does not belong to the target trajectory, the ADAS may compute a possible intended trajectory connecting the position of the vehicle to the preview point. For example, the intended trajectory is computed by interpolation of a path between the position of the vehicle and the preview point, see [REF 8] and [REF 9].

The computation of the intended trajectory may also take into account other parameters that are extrinsic to the driver such as road curvature, position of mobile agents, topography of the road, etc. In particular, it may be avoided that the preview point leads to an intended trajectory that is unsafe and/or that passes by an obstacle.

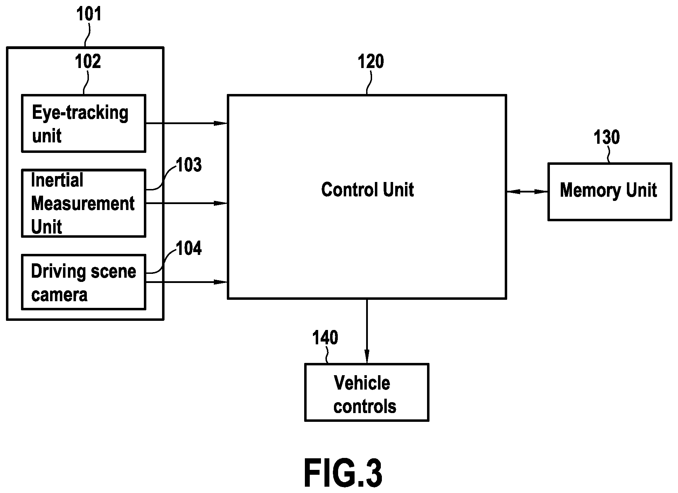

In reference to FIG. 3, a driver assistance system for a vehicle is presented. The driver assistance system takes into account gazing direction of a driver in order to control the vehicle. The driver assistance system comprises a set of sensors 101, a control unit 120, and a memory unit 130.

The set of sensors 101 may comprise an eye-tracking unit 102 (eye-tracker), an inertial measurement unit 103, and a driving scene camera 104. The set of sensors 101 is configured to detect several parameters related to the environment of the vehicle and to the driver, and to transmit such parameters to the control unit 120. In particular, the driving scene camera 104 is configured to capture images of the driving scene ahead of the vehicle and the eye-tracker 102 is configured to detect the eye gazing direction of the driver. Further, the inertial measurement unit 103 is configured to acquire the position of the head of the driver relative to the reference frame of the vehicle.

The eye-tracker 102 may comprise different types of devices. In particular, the eye-tracker may comprise a goggle-type eye-tracker system that is arranged on the driver's head. Further, the eye-tracker may comprise a camera set located in the cabin of the vehicle. The camera set takes pictures or takes a video of the driver's face that is analyzed by computer vision techniques in order to determine eye gazing data.

In embodiments, the set of sensors 101 may further comprise a force sensor (not illustrated) configured to detect grip force of the driver. For example, the set of sensors 101 may comprise an instrumented steering wheel that captures the grip force of the arms and/or hands on the steering wheel of the vehicle, see [REF 3]. The grip force of the driver on the steering wheel, which is related to the muscle tension of the driver, may be used to interpret the level of attention of the driver, or the level of acceptance of the ADAS in order to optimize the control of the vehicle by the ADAS.

FIG. 3 illustrates embodiments of the present system comprising an inertial measurement unit 103. However such inertial measurement unit is optional. For example, in embodiments (not illustrated), the eye-tracker 102 may be able to obtain eye gazing data in the reference frame of the vehicle so that the system does not require an inertial measurement unit to measure the head position of the driver.

The control unit 120 receives the data provided by the sensors and generates an intended trajectory of the driver. The generation of the intended trajectory relies on the calculation of the 3D coordinates of the preview point at which the driver is gazing in the driving scene and the interpolation of the trajectory between the position of the vehicle and the preview point.

Further, the control unit 120 compares the intended trajectory to a preset reference trajectory stored in a memory unit 130. The preset reference trajectory may be a trajectory selected by the driver at the start of the vehicle, for example according to a given driving scenario or driver profile. The preset reference trajectory may further be a trajectory that has been previously computed and stored in the memory unit 130, for example taking into account a previous gazing state of the driver. In embodiments, the preset reference trajectory may be retrieved by the control unit 120 upon starting the vehicle or at any time during the driving course.

Based on the differences between the intended trajectory 27 and the reference preset trajectory 23, the control unit 120 generates actuation signals configured to cause the vehicle to exhibit a target trajectory that improves acceptance of the ADAS by the driver. In particular, the actuation signals may be calculated so that the target trajectory is closer to the intended trajectory 27 than the preset reference trajectory 23. The control unit 120 may be based on model predictive control (MPC) such as disclosed, for example, in [REF 7]. In particular, the control unit 120 may be configured so that the calculated actuation signals minimize a cost function for the constrained dynamical system of the vehicle over a finite receding prediction horizon, wherein the intended trajectory is the optimization target. In other embodiments, the target trajectory might be a fixed preview point value for all prediction horizons, or comprise only points at certain preview times (e.g. based on a Linear-Quadratic-Regulator (LQR) controller).

The actuation signals provided by the control unit 120 are sent to the vehicle controls 140 to modify the trajectory of the vehicle so that the vehicle adopts the target trajectory. As the target trajectory is closer to the driver's intended trajectory, the acceptance of the ADAS by the driver is enhanced. In embodiments, the control unit 120 may be configured to induce a progressive modification of the trajectory of the vehicle towards the target trajectory, in order to improve comfort of the driver during the trajectory modification.

In embodiments, actuations signals are recalculated continuously with a predetermined refreshing rate so that the trajectory of the vehicle is updated in real time with new eye gazing data in order to maintain a good acceptance of the ADAS. Therefore, the present system may act as a closed-loop control system that takes into account the driver's intention.

During driving, the preview points of the driver at different times may be stored in the memory unit 130 in order to form a reference trajectory that can be used as a reference by the control unit 120. Further. the reference trajectory may be analyzed to define a driver profile associated to the reference trajectory. Therefore, a driver can select a driver profile that better fits his driving behavior.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A computer-implemented method to determine an intended trajectory of a driver of a vehicle, comprising:

   - (S10) acquiring eye gazing data indicative of a gazing direction (12) of the driver (11);
   - (S20) calculating coordinates of a preview point (25) of the driver (11) in a driving scene surrounding the vehicle based on the eye gazing data; and
   - (S30) determining an intended trajectory (27) of the driver (11) based on the coordinates of the preview point (25);

   wherein the method further comprises a step of acquiring a head position of the driver (11) with respect to the vehicle (13), wherein the head position of the driver (11) is used to calculate the coordinates of the preview point (25); and

   the eye gazing data are acquired in a first reference frame that is a reference frame of the head of the driver (11), and the coordinates of the preview point (25) are calculated in a second reference frame that is a reference frame of the vehicle (13), wherein a change from the first reference frame to the second reference frame is calculated based on the head position of the driver (11).

2. The method of claim 1, further comprising a step of acquiring a 3D image of the driving scene, wherein the coordinates of the preview point (25) in the driving scene are calculated by associating an element of the 3D image to the preview point (25).

3. The method of any of claims 1 to 3, wherein the method is executed repetitively while the vehicle (13) is being driven by the driver (11) with a predetermined refreshing rate.

4. A computer-implemented driver assistance system for a vehicle, the system comprising:

   - an eye-tracker (102) configured to acquire eye gazing data indicative of a gazing direction (12) of a driver (11) of the vehicle (13);
   - a control unit (120) configured to

calculate coordinates of a preview point (25) of the driver (11) in a driving scene surrounding the vehicle based on the eye gazing data,

generate an intended trajectory (27) of the driver (11) based on the eye gazing data acquired by the eye-tracker (102), and

generate actuation signals based on the intended trajectory of the driver (11), the actuation signals being sent to vehicle controls (140) in order to modify a current trajectory (23) of the vehicle (13); and

- an inertial measurement unit (103) configured to measure the head position of the driver with respect to a reference frame that is the reference frame of the vehicle, wherein the control unit (120) is configured to generate the intended trajectory (27) further based on the head position,

wherein the eye gazing data are acquired in a first reference frame that is a reference frame of the head of the driver (11), and the coordinates of the preview point (25) are calculated in a second reference frame that is the reference frame of the vehicle (13), wherein a change from the first reference frame to the second reference frame is calculated based on the head position of the driver (11).

5. The system of claim 4, further comprising a force sensor configured to detect grip force of the driver on the steering wheel of the vehicle, wherein the control unit (120) is configured to generate the intended trajectory further based on such grip force.

6. The system of claim 4 or 5, wherein the control unit (120) is configured to receive the intended trajectory (27) as a target over a given prediction horizon in order to generate the actuation signals.

7. The system of claim 4 to 6, wherein the control unit (120) is further configured to generate the actuation signals based on a difference between the intended trajectory (27) and the current trajectory (23) of the vehicle in order to command a progressive transition between the current trajectory (23) and the intended trajectory (27).

8. The system of any of claims 4 to 7, further comprising:
a memory unit (130) communicatively coupled to the control unit (120), wherein the memory unit (130) is configured to store a reference trajectory associated with a driver profile.

9. The system of claim 8, wherein the control unit (120) is further configured to generate the actuation signals based on a comparison between the intended trajectory (27) and a reference trajectory stored in the memory unit (130).

10. The system of claim 8 or 9, wherein the memory unit (130) is configured to store the intended trajectory (27) as a new reference trajectory associated with a new driver profile of the driver (11).

11. A computer program set including instructions for executing the steps of a method of any one of claims 1 to 3, when said program set is executed by at least one computer.

12. A recording medium readable by a computer and having recorded thereon at least one computer program including instructions for executing the steps of the method of any one of claims 1 to 3.

**Patentansprüche**

1. Computerimplementiertes Verfahren zum Bestimmen einer beabsichtigten Trajektorie eines Fahrers eines Fahrzeugs, umfassend:

- (S10) Erfassen von Blickdaten, die indikativ für eine Blickrichtung (12) des Fahrers (11) sind;
- (S20) Berechnen von Koordinaten eines Vorschaupunkts (25) des Fahrers (11) in einer Fahrszene, die das Fahrzeug umgibt, basierend auf den Augen-Blickdaten; und
- (S30) Bestimmen einer beabsichtigten Trajektorie (27) des Fahrers (11) basierend auf den Koordinaten des Vorschaupunkts (25);
wobei das Verfahren ferner einen Schritt eines Erfassens einer Kopfposition des Fahrers (11) in Bezug auf das Fahrzeug (13) umfasst, wobei die Kopfposition des Fahrers (11) verwendet wird, um die Koordinaten des Vorschaupunkts (25) zu berechnen; und
die Augen-Blickdaten in einem ersten Bezugsrahmen erfasst werden, der ein Bezugsrahmen des Kopfs des Fahrers (11) ist, und die Koordinaten des Vorschaupunkts (25) in einem zweiten Bezugsrahmen berechnet werden, der ein Bezugsrahmen des Fahrzeugs (13) ist, wobei ein Wechsel von dem ersten Bezugsrahmen zu dem zweiten Bezugsrahmen basierend auf der Kopfposition des Fahrers (11) berechnet wird.

2. Verfahren nach Anspruch, ferner umfassend einen Schritt eines Erfassens eines 3D-Bilds der Fahrszene, wobei die Koordinaten des Vorschaupunkts (25) in der Fahrszene berechnet werden, indem ein Element des 3D-Bilds mit dem Vorschaupunkt (25) assoziiert wird.

3. Verfahren nach einem der Ansprüche 1 bis 3, wobei das Verfahren mit einer vorbestimmten Aktualisierungsrate wiederholt ausgeführt wird, während das Fahrzeug (13) von dem Fahrer (11) gefahren wird.

4. Computerimplementiertes Fahrerassistenzsystem für ein Fahrzeug, das System umfassend:

   - einen Augenverfolger (102), der konfiguriert ist, um Augen-Blickdaten zu erfassen, die indikativ für eine Blickrichtung (12) eines Fahrers (11) des Fahrzeugs (13) sind;
   - eine Steuereinheit (120), die zu Folgendem konfiguriert ist

   Berechnen der Koordinaten eines Vorschaupunkts (25) des Fahrers (11) in einer Fahrszene, die das Fahrzeug umgibt, basierend auf den Augen-Blickdaten,
   Erzeugen einer beabsichtigten Trajektorie (27) des Fahrers (11) basierend auf den Augen-Blickdaten, die von dem Augenverfolger (102) erfasst werden, und
   Erzeugen von Betätigungssignalen basierend auf der beabsichtigten Trajektorie des Fahrers (11), wobei die Betätigungssignale an Fahrzeugsteuerungen (140) gesendet werden, um eine aktuelle Trajektorie (23) des Fahrzeugs (13) zu modifizieren; und

   - eine Trägheitsmesseinheit (103), die konfiguriert ist, um die Kopfposition des Fahrers in Bezug auf einen Bezugsrahmen zu messen, der der Bezugsrahmen des Fahrzeugs ist, wobei die Steuereinheit (120) konfiguriert ist, um die beabsichtigte Trajektorie (27) ferner basierend auf der Kopfposition zu erzeugen,

   wobei die Augen-Blickdaten in einem ersten Bezugsrahmen erfasst werden, der ein Bezugsrahmen des Kopfs des Fahrers (11) ist, und die Koordinaten des Vorschaupunkts (25) in einem zweiten Bezugsrahmen berechnet werden, der der Bezugsrahmen des Fahrzeugs (13) ist, wobei ein Wechsel von dem ersten Bezugsrahmen zu dem zweiten Bezugsrahmen basierend auf der Kopfposition des Fahrers (11) berechnet wird.

5. System nach Anspruch 4, ferner umfassend einen Kraftsensor, der konfiguriert ist, um eine Griffkraft des Fahrers an dem Lenkrad des Fahrzeugs zu erfassen, wobei die Steuereinheit (120) konfiguriert ist, um die beabsichtigte Trajektorie ferner basierend auf einer solchen Griffkraft zu erzeugen.

6. System nach Anspruch 4 oder 5, wobei die Steuereinheit (120) konfiguriert ist, um die beabsichtigte Trajektorie (27) als Ziel über einen bestimmten Vorhersagehorizont zu empfangen, um die Betätigungssignale zu erzeugen.

7. System nach Anspruch 4 bis 6, wobei die Steuereinheit (120) ferner konfiguriert ist, um die Betätigungssignale basierend auf einer Differenz zwischen der beabsichtigten Trajektorie (27) und der aktuellen Trajektorie (23) des Fahrzeugs zu erzeugen, um einen progressiven Übergang zwischen der aktuellen Trajektorie (23) und der beabsichtigten Trajektorie (27) zu steuern.

8. System nach einem der Ansprüche 4 bis 7, ferner umfassend:
   eine Speichereinheit (130), die kommunikativ mit der Steuereinheit (120) gekoppelt ist, wobei die Speichereinheit (130) konfiguriert ist, um eine Bezugstrajektorie zu speichern, die mit einem Fahrerprofil assoziiert ist.

9. System nach Anspruch 8, wobei die Steuereinheit (120) ferner konfiguriert ist, um die Betätigungssignale basierend auf einem Vergleich zwischen der beabsichtigten Trajektorie (27) und einer Bezugstrajektorie zu erzeugen, die in der Speichereinheit (130) gespeichert ist.

10. System nach Anspruch 8 oder 9, wobei die Speichereinheit (130) konfiguriert ist, um die beabsichtigte Trajektorie (27) als eine neue Bezugstrajektorie zu speichern, die mit einem neuen Fahrerprofil des Fahrers (11) assoziiert ist.

11. Computerprogrammsatz, der Anweisungen zum Ausführen der Schritte eines Verfahrens nach einem der Ansprüche 1 bis 3 beinhaltet, wenn der Programmsatz von mindestens einem Computer ausgeführt wird.

12. Aufzeichnungsmedium, das von einem Computer lesbar ist und auf dem mindestens ein Computerprogramm aufgezeichnet ist, das Anweisungen zum Ausführen der Schritte des Verfahrens nach einem der Ansprüche 1 bis 3 beinhaltet.

**Revendications**

1. Procédé mis en œuvre par ordinateur pour déterminer une trajectoire prévue d'un conducteur d'un véhicule, comprenant :

- (S10) acquisition de données relatives au regard indicatives d'une direction du regard (12) du conducteur (11) ;
- (S20) calcul de coordonnées d'un point de prévisualisation (25) du conducteur (11) dans une scène de conduite entourant le véhicule sur la base des données relatives au regard ; et
- (S30) détermination d'une trajectoire prévue (27) du conducteur (11) sur la base des coordonnées du point de prévisualisation (25) ;
le procédé comprenant en outre une étape d'acquisition d'une position de tête du conducteur (11) par rapport au véhicule (13), la position de tête du conducteur (11) étant utilisée pour calculer les coordonnées du point de prévisualisation (25) ; et
les données relatives au regard étant acquises dans un premier cadre de référence qui est un cadre de référence de la tête du conducteur (11), et les coordonnées du point de prévisualisation (25) étant calculées dans un deuxième cadre de référence qui est un cadre de référence du véhicule (13), un changement du premier cadre de référence au deuxième cadre de référence étant calculé sur la base de la position de tête du conducteur (11).

2. Procédé selon la revendication 1, comprenant en outre une étape d'acquisition d'une image 3D de la scène de conduite, les coordonnées du point de prévisualisation (25) dans la scène de conduite étant calculées en associant un élément de l'image 3D au point de prévisualisation (25).

3. Procédé selon l'une quelconque des revendications 1 à 3, selon lequel le procédé est exécutée de manière répétitive alors que le véhicule (13) est conduit par le conducteur (11) avec un taux de rafraichissement prédéterminé.

4. Système d'assistance de conducteur mis en œuvre par ordinateur pour un véhicule, le système comprenant :

- un dispositif de suivi d'œil (102) configuré pour acquérir des données relatives au regard indicatives d'une direction du regard (12) d'un conducteur (11) du véhicule (13) ;
- une unité de commande (120) configurée pour

calculer des coordonnées d'un point de prévisualisation (25) du conducteur (11) dans une scène de conduite entourant le véhicule sur la base des données relatives au regard,
générer une trajectoire prévue (27) du conducteur (11) sur la base des données relatives au regard acquises par le dispositif de suivi d'œil (102), et
générer des signaux d'actionnement sur la base de la trajectoire prévue du conducteur (11), les signaux d'actionnement étant envoyés à des commandes de véhicule (140) de façon à modifier une trajectoire courante (23) du véhicule (13) ; et

- une unité de mesure à inertie (103) configurée pour mesurer la position de tête du conducteur par rapport à un cadre de référence qui est le cadre de référence du véhicule, l'unité de commande (120) étant configuré pour générer la trajectoire prévue (27) sur la base en outre de la position de tête,

les données relatives au regard étant acquises dans un premier cadre de référence qui est un cadre de référence de la tête du conducteur (11), et les coordonnées du point de prévisualisation (25) étant calculées dans un deuxième cadre de référence qui est le cadre de référence du véhicule (13), un changement du premier cadre de référence au deuxième cadre de référence étant calculé sur la base de la position de tête du conducteur (11).

5. Système selon la revendication 4, comprenant en outre un capteur de force configuré pour détecter une force de saisie du conducteur sur le volant du véhicule, l'unité de commande (120) étant configurée pour générer la trajectoire prévue sur la base en outre de cette force de saisie.

**6.** Système selon la revendication 4 ou 5, dans lequel l'unité de commande (120) est configurée pour recevoir la trajectoire prévue (27) comme cible sur un horizon de prédiction donné afin de générer des signaux d'actionnement.

**7.** Système selon la revendication 4 à 6, dans lequel l'unité de commande (120) est en outre configurée pour générer les signaux d'actionnement sur la base d'une différence entre la trajectoire prévue (27) et la trajectoire courante (23) du véhicule afin de commander une transition progressive entre la trajectoire courante (23) et la trajectoire prévue (27).

**8.** Système selon l'une quelconque des revendications 4 à 7, comprenant en outre :
une unité de mémoire (130) reliée pour communication à l'unité de commande (120), l'unité de mémoire (130) étant configurée pour stocker une trajectoire de référence associée à un profil de conducteur.

**9.** Système selon la revendication 8, dans lequel l'unité de commande (120) est en outre configurée pour générer les signaux d'actionnement sur la base d'une comparaison entre la trajectoire prévue (27) et une trajectoire de référence stockée dans l'unité de mémoire (130).

**10.** Système selon la revendication 8 ou 9, dans lequel l'unité de mémoire (130) est configurée pour stocker la trajectoire prévue (27) comme nouvelle trajectoire de référence associée à un nouveau profil de conducteur du conducteur (11).

**11.** Ensemble de programme informatique comprenant des instructions pour exécuter les étapes d'un procédé selon l'une quelconque des revendications 1 à 3, quand ledit ensemble de programme est exécuté par au moins un ordinateur.

**12.** Support d'enregistrement lisible par un ordinateur et ayant enregistré dessus au moins un programme informatique comprenant des instructions pour exécuter les étapes du procédé selon l'une quelconque des revendications 1 à 3.

**FIG.1**

S10 — Acquiring eye gazing data indicative of a gazing direction of the driver

S20 — Calculating coordinates of a preview point of the driver in a driving scene surrounding the vehicle based on the eye gazing data

S30 — Determining an intended trajectory of the driver based on the coordinates of the preview point

**FIG.2**

**FIG.3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111797809 A
- US 2010036563 A1
- US 2012046802 A1
- JP 2008018853 A
- US 2021394828 A1

**Non-patent literature cited in the description**

- **PARASURAMAN, RAJA** ; **RILEY. VICTOR.** Humans and automation: Use, misuse, disuse, abuse. *Human factors*, 1997, vol. 39 (2), 230-253
- Further understanding of steering feedback and driver behavior through the application of an instrumented steering wheel. **CARRERA AKUTAIN** ; **XABIER** ; **ONO** ; **KIMIAKI** ; **COMOLLI** ; **FRANCESCO et al.** 10th International Munich Chassis Symposium 2019: chassis. tech plus. Springer Fachmedien Wiesbaden, 2020, 481-502
- **GOODRICH, MICHAEL A.** ; **BOER, ERWIN R**. Model-based human-centered task automation: a case study in ACC system design.. *IEEE Transactions on Systems, Man, and Cybernetics-Part A: Systems and Humans*, 2003, vol. 33 (3), 325-336
- **LAZCANO** ; **ANDREA MICHELLE RIOS** ; **NIU, TENGHAO** ; **CARRERA AKUTAIN** ; **XABIER et al.** MPC-based haptic shared steering system: A driver modeling approach for symbiotic driving. *IEEE/ASME Transactions on Mechatronics*, 2021, vol. 26 (3), 1201-1211
- **PALAIS** ; **BOB** ; **PALAIS** ; **RICHARD** ; **RODI, STEPHEN**. A disorienting look at Euler's theorem on the axis of a rotation. *The American Mathematical Monthly*, 2009, vol. 116 (10), 892-909
- A linear time varying model predictive control approach to the integrated vehicle dynamics control problem in autonomous systems. **FALCONE** ; **PAOLO** ; **TUFO** ; **MANUELA** ; **BORRELLI** ; **FRANCESCO et al.** 2007 46th IEEE Conference on Decision and Control. IEEE, 2007, 2980-2985
- **XU, YING** ; **TANG, WENTAO** ; **CHEN, BIYUN et al.** A model predictive control with preview-follower theory algorithm for trajectory tracking control in autonomous vehicles. *Symmetry*, 2021, vol. 13 (3), 381
- **VU** ; **TRIEU MINH** ; **MOEZZI** ; **REZA** ; **CYRUS** ; **JINDRICH et al.** Feasible Trajectories Generation for Autonomous Driving Vehicles. *Applied Sciences*, 2021, vol. 11 (23), 11143
- **KLAIB, AHMAD F** ; **ALSREHIN, NAWAF O** ; **MELHEM, WASEN Y et al.** Eye tracking algorithms, techniques, tools, and applications with an emphasis on machine learning and Internet of Things technologies. *Expert Systems with Applications*, 2021, vol. 166, 114037